(19) Europäisches Patentamt / European Patent Office / Office européen des brevets

(11) **EP 2 191 297 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*G01S 13/90* (2006.01)

(21) Anmeldenummer: **08801539.1**

(22) Anmeldetag: **08.08.2008**

(86) Internationale Anmeldenummer:
**PCT/EP2008/006553**

(87) Internationale Veröffentlichungsnummer:
**WO 2009/030339 (12.03.2009 Gazette 2009/11)**

(54) **SYNTHETIK-APERTUR-RADARVERFAHREN**

SYNTHETIC APERTURE RADAR PROCESS

PROCÉDÉ FAISANT APPEL À UN RADAR À SYNTHÈSE D'OUVERTURE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.08.2007 DE 102007041373**

(43) Veröffentlichungstag der Anmeldung:
**02.06.2010 Patentblatt 2010/22**

(73) Patentinhaber: **Deutsches Zentrum für Luft- und Raumfahrt e.V.**
**51147 Köln (DE)**

(72) Erfinder:
- **GEBERT, Nicolas**
  **2311 PM Leiden (NL)**
- **KRIEGER, Gerhard**
  **82152 Planegg (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
EP-A- 1 241 487          CN-A- 1 808 175
DE-A1-102006 033 922     US-A1- 2006 239 119

- **SEDEHI ET AL: "A study for a space-based passive Multichannel SAR" RIUNIONE 2007 GTTI, 19. Juni 2007 (2007-06-19), Seiten 1-16, XP007906348 Roma**
- **DIEGO CRISTALLINI ET AL: "Adaptive antenna configuration for unambiguous signal reconstruction in dual-channel SAR systems" RADAR CONFERENCE, 2007. EURAD 2007. EUROPEAN, IEEE, PI, 1. Oktober 2007 (2007-10-01), Seiten 107-110, XP031191621 ISBN: 978-2-87487-004-0**
- **SUESS M ET AL: "A novel high resolution, wide swath SAR system" IGARSS 2001. IEEE 2001 INTERNATIONAL GEOSCIENCE AND REMOTE SENSING SYMPOSIUM. SYDNEY, AUSTRALIA, JULY 9 - 13, 2001; [IEEE INTERNATIONAL GEOSCIENCE AND REMOTE SENSING SYMPOSIUM], NEW YORK, NY : IEEE, US, Bd. 3, 9. Juli 2001 (2001-07-09), Seiten 1013-1015, XP010572002 ISBN: 978-0-7803-7031-9**
- **LOMBARDO P ET AL: "An alternating transmit approach for STAP with short antenna arrays" RADAR CONFERENCE, 2004. PROCEEDINGS OF THE IEEE PHILADELPHIA, PA, USA APRIL 26-29, 2004, PISCATAWAY, NJ, USA,IEEE, 26. April 2004 (2004-04-26), Seiten 420-425, XP010711565 ISBN: 978-0-7803-8234-3 in der Anmeldung erwähnt**
- **GEBERT N ET AL: "SAR signal reconstruction from non-uniform displaced phase centre sampling in the presence of perturbations" GEOSCIENCE AND REMOTE SENSING SYMPOSIUM, 2005. IGARSS '05. PROCEEDINGS . 2005 IEEE INTERNATIONAL SEOUL, KOREA 25-29 JULY 2005, PISCATAWAY, NJ, USA,IEEE, Bd. 2, 25. Juli 2005 (2005-07-25), Seiten 1034-1037, XP010848320 ISBN: 978-0-7803-9050-8 in der Anmeldung erwähnt**

- GEBERT N ET AL: "Unambiguous SAR Signal Reconstruction From Nonuniform Displaced Phase Center Sampling" IEEE GEOSCIENCE AND REMOTE SENSING LETTERS, IEEE SERVICE CENTER, NEW YORK, NY, US, Bd. 1, Nr. 4, 1. Oktober 2004 (2004-10-01), Seiten 260-264, XP011120870 ISSN: 1545-598X in der Anmeldung erwähnt
- YOUNIS, MARWAN: "Digital beam-forming for high-resolution wide swath real and synthetic aperture radar" 22. Juli 2004 (2004-07-22), PROF. DR. ING. W. WIESBECK , KARLSRUHE , XP007906304 in der Anmeldung erwähnt das ganze Dokument
- WU SHUNHUA ET AL: "Analysis and simulation of spatial interval non-uniform samples in azimuth multiple phase centers SAR" SIGNAL PROCESSING, 2004. PROCEEDINGS. ICSP '04. 2004 7TH INTERNATIONAL CONFERENCE ON BEIJING, CHINA AUG. 31 - SEPT 4, 2004, PISCATAWAY, NJ, USA,IEEE, Bd. 3, 31. August 2004 (2004-08-31), Seiten 2175-2178, XP010810858 ISBN: 978-0-7803-8406-4
- KRIEGER G ET AL: "SAR signal reconstruction from non-uniform displaced phase centre sampling" GEOSCIENCE AND REMOTE SENSING SYMPOSIUM, 2004. IGARSS '04. PROCEEDINGS . 2004 IEEE INTERNATIONAL ANCHORAGE, AK, USA 20-24 SEPT. 2004, PISCATAWAY, NJ, USA,IEEE, Bd. 3, 20. September 2004 (2004-09-20), Seiten 1763-1766, XP010751954 ISBN: 978-0-7803-8742-3
- COOPER P S ET AL: "High resolution synthetic aperture radar using a multiple sub-band technique" RADAR '97. EDINBURGH, OCT. 14 - 16, 1997; [IEE CONFERENCE PUBLICATION], LONDON : IEE, GB, Bd. NO. 449, 14. Oktober 1997 (1997-10-14), Seiten 263-267, XP006508947 ISBN: 978-0-85296-698-3

**Beschreibung**

Technisches Gebiet

Die Erfindung betrifft ein Synthetik-Apertur-Radarverfahren zur Fernerkundung der Erdoberfläche unter Verwendung einer oder mehrerer, sich mit konstanter Geschwindigkeit über der Erdoberfläche bewegender Trägerplattformen mit einem orthogonal zur Bewegungsrichtung und damit zur Azimut-Richtung schräg nach unten blickenden, aus einem Sende- und Empfangsantennensystem bestehenden, in Azimut-Richtung strahlsteuerbaren Multi-Apertur-Antennensystem und einer kohärent arbeitenden Radarvorrichtung, die über das Sendeantennensystem periodisch mit einer Pulswiederholfrequenz Hochfrequenzimpulse aussendet und die über das Empfangsantennensystem Echosignale empfängt, wobei sich effektive Azimut-Phasenzentren, die den als Abtastwerte bezeichneten, empfangenen Echosignalen zugeordnet sind, an einem räumlichen Ort in Azimut-Richtung befinden, der dem geometrischen Mittelpunkt zwischen dem tatsächlich bei der Aussendung der Hochfrequenzimpulse elektrisch wirksamen Phasenzentrum des Sendeantennensystems und dem tatsächlich beim Empfang der Echosignale elektrisch wirksamen Phasenzentrum des Empfangsantennensystems entspricht.

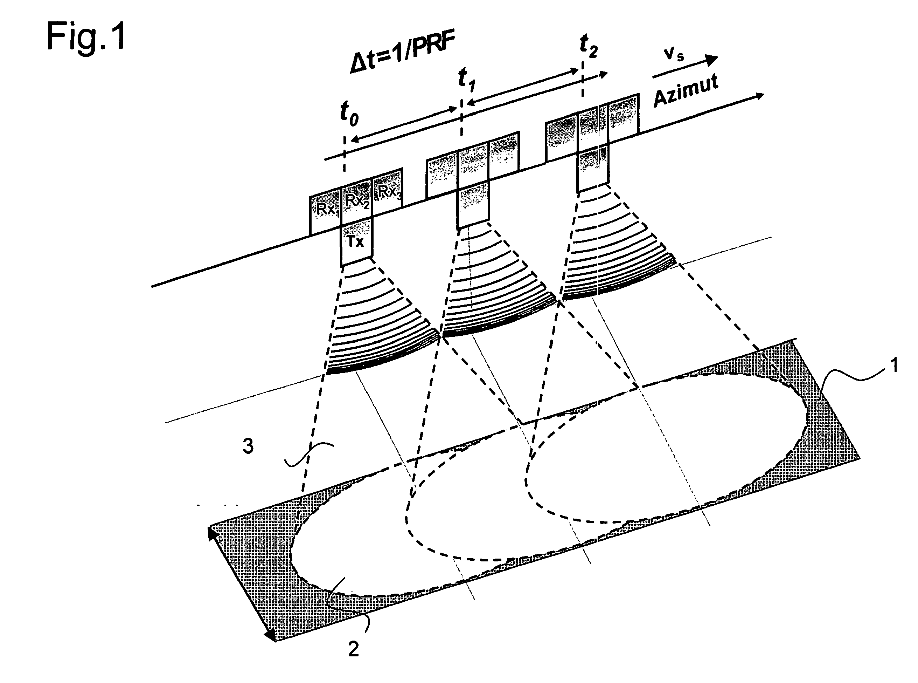

Ein Synthetik-Apertur-Radarsystem, kurz SAR genannt, ist ein Instrument zur Fernerkundung, das in immer stärkerem Maße Einsatz bei der Abbildung, Überwachung und Untersuchung der Erdoberfläche findet. Schon das Ein- und Ausschalten bestimmter Elemente kann als Strahlsteuerung betrachtet werden. Wie Fig.1 zeigt, weist ein solches Radarsystem eine oder mehrere, sich mit konstanter Geschwindigkeit $v_s$ über der Erdoberfläche bewegende Trägerplattformen mit einer orthogonal zur Bewegungsrichtung blickenden Sendeantenne Tx und mehreren ebenso ausgerichteten Empfangsantennen $Rx_i$ (im dargestellten Beispiel drei Empfangsantennen $Rx_1$, $Rx_2$ und $Rx_3$) und eine kohärent arbeitende Radarvorrichtung auf, welche periodisch mit einer abgekürzt mit PRF bezeichneten Pulswiederholfrequenz elektromagnetische Hochfrequenzimpulse über die Sendeantenne Tx aussendet.

Die Bewegungsrichtung der Trägerplattformen wird als Azimut-Richtung und die dazu orthogonale, schräg nach unten weisende Richtung als Entfernungsrichtung bezeichnet. Im normalen SAR-Betriebsmodus, der als Streifenmodus bezeichnet wird, wird während des Überflugs über ein zu beobachtendes Gebiet ein Bodenstreifen 1 mit der Länge der überflogenen Strecke abgebildet. Dabei besteht die Empfangsantenne in Azimut-Richtung entweder aus $N$ separaten Empfangsantennen auf der gleichen Trägerplattform oder aus $N$ Empfangsantennen auf separaten Trägerplattformen (Multi-Empfangsantenne).

Stand der Technik

In dem in Fig.1 dargestellten Beispiel eines Multi-Apertur-SAR-Systems bewegt sich der Radarsensor mit konstanter Geschwindigkeit $v_s$ entlang der Azimut-Richtung, wobei die Sendeantenne Tx dabei zu den Zeitpunkten $t_0$, $t_1$ und $t_2$ mit der Pulswiederholfrequenz PRF Impulse emittiert, die am Boden zurückgestreut und von jeder der beispielhaft drei Empfangsaperturen $Rx_1$, $Rx_2$ und $Rx_3$ aufgenommen werden. Von einem punktförmigen Ziel ("Punktziel") am Boden reflektierte Signale werden als Echos empfangen, solange sich das Ziel innerhalb der Auftrefffläche 2 der Antennenkeule 3 befindet. Die Länge der Strecke, während der das von einem Ziel reflektierte Signal zum Empfangssignal beiträgt, wird als synthetische Apertur bezeichnet.

Entscheidend ist, dass für jeden von der Sendeantenne Tx ausgesendeten Hochfrequenzimpuls $N$ Echosignale, d.h. jeweils ein Echosignal pro Empfangsapertur $Rx_i$, ($Rx_1$, $Rx_2$, $Rx_3$ in Fig.1) empfangen werden, also drei Echosignale in dem in Fig.1 dargestellten Beispiel, die nach dem Empfang in den entsprechenden $N$ Empfangsaperturen in der Radarvorrichtung heruntergemischt, quadraturdemoduliert, digitalisiert und in einem Echosignalspeicher abgelegt werden.

Der räumliche Ort in Azimut-Richtung, der dem empfangenen Echosignal, dem sogenannten "Abtastwert", zugeordnet wird, wird als "effektives Phasenzentrum" bezeichnet und entspricht dem geometrischen Mittelpunkt zwischen dem elektrisch wirksamen Phasenzentrum des Senders (Tx) und dem elektrisch wirksamen Phasenzentrum der jeweiligen Empfangsapertur ($Rx_i$). Das Phasenzentrum einer einzelnen Antenne (nachfolgend auch mit Apertur bezeichnet) befindet sich dabei im Allgemeinen in deren Schwerpunkt. Das effektive Phasenzentrum der Sende/Empfangskombination wird somit durch den Abstand zwischen Sendeapertur und Empfangsaperturen bestimmt.

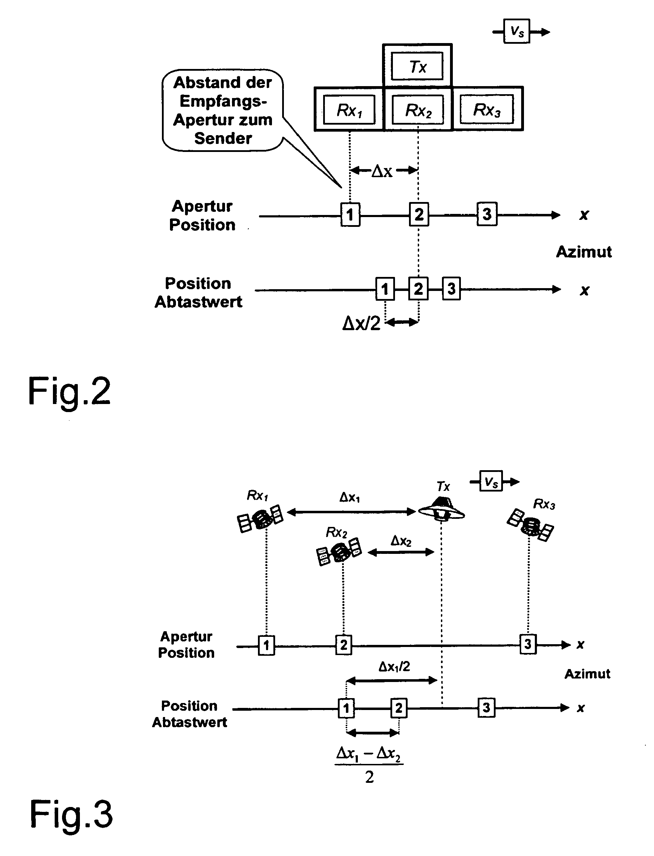

Fig.2 zeigt diesbezüglich ein Beispiel einer Antenne mit mehreren Empfangsaperturen $Rx_1$, $R_{X2}$ und $Rx_3$ und einer Sendeapertur Tx auf einer sich mit einer Geschwindigkeit $v_s$ in Azimut-richtung bewegenden Trägerplattform. Fig. 3 zeigt dagegen mehrere Empfangsantennen $Rx_1$, $Rx_2$ und $Rx_3$ und eine Sendeantenne Tx auf separaten Trägerplattformen, die sich alle mit einer Geschwindigkeit $v_s$ in Azimut-Richtung bewegen.

Aus Fig.2 und Fig.3 sind die dort als Apertur-Position bezeichneten Azimutpositionen $x$ der beispielsweise drei Empfangsaperturen $Rx_1$, $Rx_2$ und $Rx_3$ bzw. Empfangsantennen $Rx_1$, $Rx_2$ und $Rx_3$ und die dort als Position-Abtastwert bezeichneten Positionen $x$ der zugehörigen effektiven Phasenzentren ersichtlich, die den Ort des Abtastwertes bestimmen.

In Fig.2 beträgt der Abstand zwischen den beiden äußeren Empfangsaperturen $Rx_1$ bzw. $Rx_3$ einerseits und der Sendeapertur Tx andererseits jeweils $\Delta x$, wobei die Sendeapertur Tx in Azimut-Richtung mit der mittleren Empfangsapertur $Rx_2$ zusammenfällt. Die drei effektiven Phasenzentren haben in Azimut-Richtung einen Abstand von $\Delta x/2$ zueinander, wobei das mittlere der drei effektiven Phasenzentren mit der Apertur-Position der Sendeapertur Tx und der mittleren Empfangsapertur $Rx_2$ zusammenfällt.

In Fig.3 bezeichnet $\Delta x_1$ den Abstand der Sendeantenne Tx zur Empfangsantenne $Rx_1$ und $\Delta x_2$ den Abstand der Senseantenne Tx zur Empfangsantenne $Rx_2$. Somit beträgt der Abstand des ersten effektiven Phasenzentrums zur Sendeantenne Tx $\Delta x_1/2$ und der Abstand zwischen dem ersten und dem zweiten effektiven Phasenzentrum $\frac{\Delta x_1 - \Delta x_2}{2}$. Das dritte effektive Phasenzentrum liegt in der geometrischen Mitte zwischen der Sendeantenne Tx und der dritten Empfangsantenne $Rx_3$.

Der räumliche Abstand in Azimut-Richtung am gleichen Empfänger zwischen den empfangenen Echosignalen aufeinanderfolgender Sendeimpulse wird durch die zurückgelegte Wegstrecke von Sender und Empfänger zwischen den Impulsen bestimmt. Der Abstand lässt sich somit aus dem Produkt der Geschwindigkeit $v_s$ und dem Kehrwert der Pulswiederholfrequenz *PRF* berechnen, der gerade der Zeitspanne zwischen zwei Sendeimpulsen entspricht.

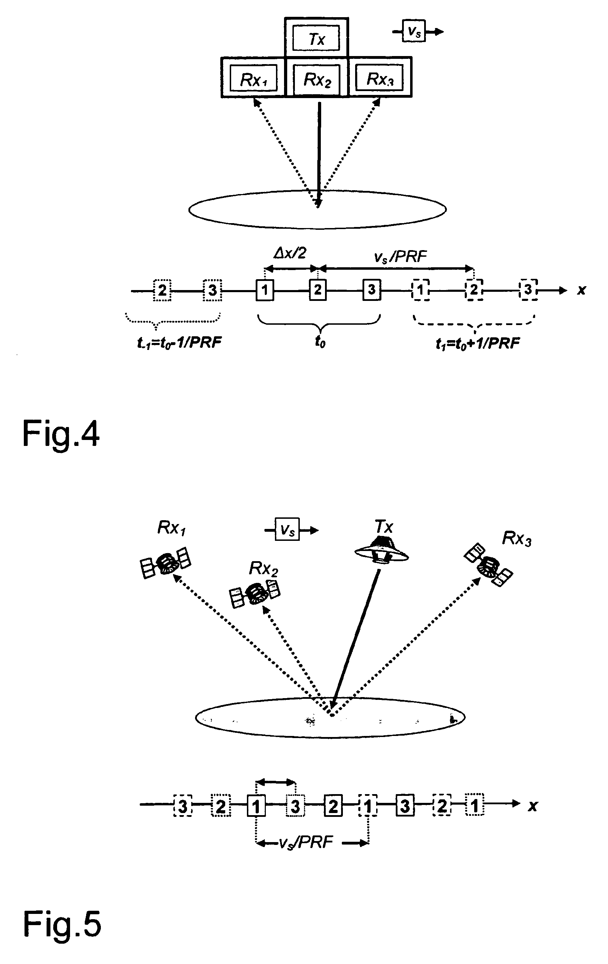

Die räumliche Position der Abtastwerte, die sich für eine gesendete Impulsfolge für eine empfangsseitige Multi-Apertur-Antenne auf einer einzigen Trägerplattform ergibt (sogenannte räumliche Abtastung), ist in Fig.4 dargestellt. Im dargestellten Fall sind wie in Fig.2 drei Empfangsaperturen $Rx_1$, $Rx_2$ und $Rx_3$ und eine Sendeapertur Tx vorgesehen, die bezüglich der Azimutposition mit der mittleren Empfangsapertur $Rx_2$ zusammenfällt.

In Fig.5 ist die räumliche Position der Abtastwerte, die sich für eine gesendete Impulsfolge für mehrere Empfangsantennen auf separaten Trägerplattformen ergibt, illustriert. Im dargestellten Fall sind wie in Fig.3 drei getrennte Empfangsantennen $Rx_1$, $Rx_2$ und $Rx_3$ und eine zu diesen separat angeordnete Sendeantenne Tx vorgesehen. Für ein System mit getrennten Empfangsantennen auf separaten Trägerplattformen erhält man im Wesentlichen das gleiche Szenario wie im Fall der Fig.4 für die räumliche Abtastung, jedoch gilt es zu beachten, dass räumlich benachbarte Impulse nicht zwingend zu Echosignalen desselben Sendeimpulses gehören.

Wie vorstehend bereits angesprochen wurde, ist die räumliche Position des Abtastwertes vom Abstand der Sendeantenne zur jeweiligen Empfangsantenne festgelegt. Dies bedeutet, dass der Abstand der zum gleichen Sendeimpuls gehörenden Abtastwerte von verschiedenen Empfängern letztendlich durch den Abstand der Empfangsantennen zueinander bestimmt wird. Im Gegensatz dazu wird der Abstand der Abtastwerte der gleichen Empfangsantenne, aber unterschiedlicher Sendeimpulse von der Geschwindigkeit der Antennen sowie der Pulswiederholfrequenz *PRF* festgelegt.

Es ist nunmehr zu erkennen, dass sich nur für eine bestimmte Kombination von Abstand der Empfangsantennen zueinander sowie Geschwindigkeit $v_s$ und Pulswiederholfrequenz *PRF* eine räumliche Abtastung ergibt, bei der alle Abtastwerte den gleichen Abstand zueinander haben, also eine sogenannte äquidistante Abtastung besteht.

Für den exemplarischen Fall einer Anzahl von *N* Empfangsaperturen, die sich alle auf der gleichen Trägerplattform befinden und jeweils durch einen Abstand $\Delta x$ voneinander getrennt sind, ergibt sich folgende Bedingung, die für eine äquidistante Abtastung erfüllt sein muss:

$$\Delta x = \frac{2 \cdot v_s}{PRF \cdot N} . \qquad\qquad (1)$$

Man erkennt, dass sich für eine vorgegebene Gesamtlänge $L_a$ der Antenne, die auf *N* Empfangsaperturen der Länge $\Delta x$ "aufgeteilt" wird, folgende Pulswiederholfrequenz *PRF* ergibt, für die die Abtastung äquidistant wird:

$$PRF = \frac{2 \cdot v_s}{N \cdot \Delta x} = \frac{2 \cdot v_s}{L_a} . \qquad\qquad (2)$$

Im Umkehrschluss bedeutet dies, dass für eine davon abweichende Pulswiederholfrequenz *PRF* die Abtastung nicht-äquidistant wird, also die Abtastwerte unterschiedliche Abstände zueinander aufweisen. Es ist in der Regel praktisch unmöglich, ein SAR-System nur für den Betrieb mit einer einzigen Pulswiederholfrequenz *PRF* auszulegen, da z.B. die Abbildung eines breiten Einfallswinkelbereichs mit dem Radarsystem mehrere unterschiedliche PRF-Werte erfordert.

Somit wird im Allgemeinen in jedem SAR-System, das über mehrere Empfangsaperturen oder -antennen verfügt, eine nicht-äquidistante Abtastung des Azimutsignals nicht zu vermeiden sein, was sich schlussendlich in einer Verschlechterung der Qualität des Radarbildes in Form von ansteigenden Azimut-Mehrdeutigkeiten und erhöhter Rauschleistung äußert. Daraus folgt die Notwendigkeit einer Korrektur der nicht-äquidistanten Abtastung, um deren negative Auswirkungen auf die Qualität des Radarbildes zu korrigieren oder zumindest zu mindern.

Fig.6 bis Fig.8 zeigen beispielhaft die Anordnung der Abtastwerte für die optimale Pulswiederholfrequenz PRF, bei der der Abstand zwischen zwei Sendeimpulsen genau der halben Antennenlänge entspricht, (äquidistante Abtastung, vgl. Fig.6), sowie die nicht-äquidistante Abtastung im Falle eines zu niedrigen *PRF*-Wertes (vgl. Fig.7) und eines zu hohen *PRF*-Wertes (vgl. Fig.8).

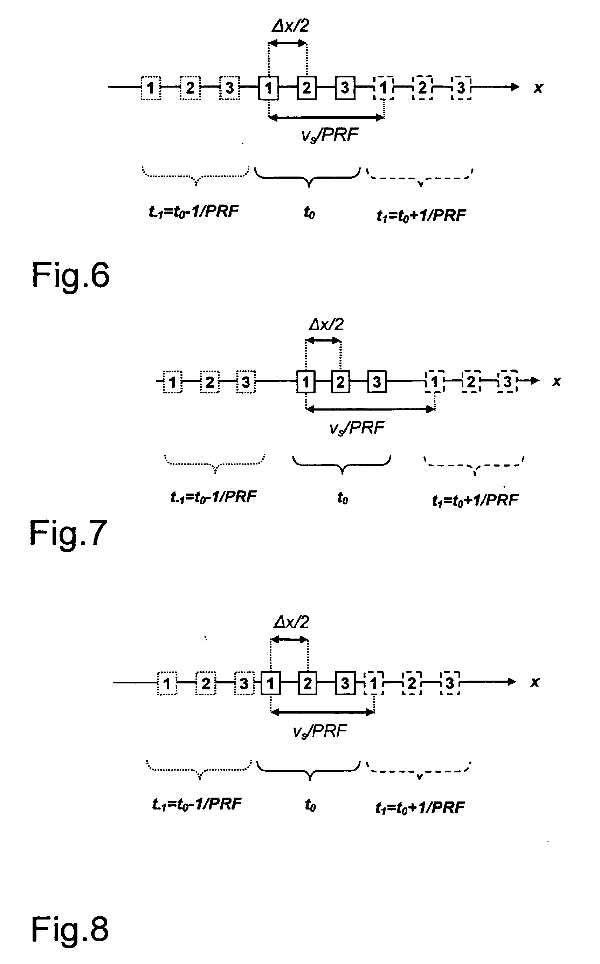

Die Darstellungen sind beispielhaft für ein SAR-System gewählt, bei dem sich die Empfangsaperturen auf einer einzigen Trägerplattform befinden. Für ein SAR-System mit Empfangsantennen auf separaten Trägerplattformen ändern sich die grundlegenden Zusammenhänge jedoch nicht. Gezeigt sind in Fig.6 bis Fig.8 jeweils Abtastwerte für drei aufeinanderfolgende Impulse (gepunktet, durchgezogen, gestrichelt) in einem SAR-System mit drei Empfangsaperturen.

Bisher wurde in SAR-Multi-Apertur-Systemen versucht, das Problem der nicht-äquidistanten Abtastung in Azimut-Richtung - falls überhaupt - durch eine Vor-Prozessierung der empfangenen und digitalisierten Echosignale vor der eigentlichen SAR-Prozessierung zu lösen. Diese Vorverarbeitung des Echosignals in Azimut-Richtung in Form der sogenannten "empfangsseitigen digitalen Strahlformung" ("Digital Beamforming on Receive") beruht auf einer dopplerfrequenzabhängigen Gewichtung und einer anschließenden kohärenten Summation der einzelnen Empfangssignale, die vor allem dazu dient, durch die nicht-äquidistante Abtastung auftretende Azimut-Mehrdeutigkeiten zu unterdrücken. Lösungen im Zusammenhang mit einer Azimut-Vorverarbeitung sind bekannt aus:

G. Krieger, N. Gebert, A. Moreira: "Unambiguous SAR Signal Reconstruction from Nonuniform Displaced Phase Center Sampling", IEEE Geoscience and Remote Sensing Letters, Vol. 1, Seiten 260-264, 2004;

M. Younis: "Digital beam-forming for high-resolution wide swath real and synthetic aperture radar", Karlsruhe, Deutschland, 2004;

N. Gebert, G. Krieger, A. Moreira: "SAR Signal Reconstruction from Non-Uniform Displaced Phase Centre Sampling in the Presence of Perturbations", Proceedings of Geoscience and Remote Sensing Symposium (IGARSS), Seoul, Südkorea, 2005; und

H. Li, H. Wang, T. Su, Z. Bao: "Generation of Wide-Swath and High-Resolution SAR Images From Multichannel Small Spaceborne SAR System", IEEE Geoscience and Remote Sensing Letters, Vol. 2 (1), Seiten 82-86, Jan. 2005.

Ein wesentliches Merkmal aller dieser bekannten Konzepte und SAR-Systeme ist die empfangsseitige Verarbeitung der Signale. Die Aufgabe der Sendeantenne besteht einzig und allein darin, die großflächige Beleuchtung des Zielgebiets zu gewährleisten. Somit entspricht die Größe der Sendeantenne in Azimut-Richtung in diesen Systemen in etwa der Größe einer einzelnen Empfangsapertur. Dies bedeutet, dass die gesamte Empfangsantenne bedeutend größere Ausmaße als die Sendeantenne aufweist.

Die bisher diesbezüglich bekannt gewordenen Vorschläge beruhen allesamt auf einer signalverarbeitungsbasierten Lösung zur Korrektur der sich aus einer nicht-äquidistanten Abtastung in Azimut-Richtung ergebenden Probleme. Diese "empfangsseitige digitale Strahlformung" ("Digital Beamforming on Receive") erlaubt z.B. die vollständige Unterdrückung von Azimut-Mehrdeutigkeiten, falls die Pulswiederholfrequenz PRF an die Geschwindigkeit der Plattform und an die Antennenlänge angepasst werden kann, also äquidistante Abtastung vorliegt.

Abweichungen von der optimalen Pulswiederholfrequenz *PRF* führen nun zwar im Vergleich zu Systemen ohne Vorverarbeitung zu einer deutlich verbesserten Unterdrückung der Azimut-Mehrdeutigkeiten, im Vergleich zur optimalen Pulswiederholfrequenz *PRF* jedoch zu einer verminderten Unterdrückung der Mehrdeutigkeiten. Die Unterdrückung wird dabei umso schlechter, je nicht-äquidistanter die Abtastwerte liegen, so dass es zu einem Betrieb des Radar-Systems mit Pulswiederholfrequenzen *PRF* kommen kann, für die keine ausreichende Unterdrückung mehr gewährleistet ist.

Damit einher geht die Verschlechterung weiterer Kenngrößen durch die Verarbeitung, wie z.B. des Signal/Rausch-Verhältnisses *SNR*. Dabei kann auch hier die hohe Empfindlichkeit dieser Fehler gegenüber der räumlichen Abtastung im Radarbild zu Fehlern führen, die sich störend auswirken, wenn aufgrund des Timings nur eine ungünstige Pulswiederholfrequenz *PRF* gewählt werden kann, die stark nicht-äquidistant liegende Abtastwerte nach sich zieht. Das Hauptproblem der "empfangsseitigen digitalen Strahlformung" ist also im Wesentlichen in der mangelnden Flexibilität des SAR-Systems gegenüber großen Variationen in der Pulswiederholfrequenz *PRF* begründet.

Darüber hinaus besitzen alle vorgestellten Multi-Apertur-SAR-Systeme naturgemäß eine große Empfangsantenne. Diese wird jedoch nicht für Sendezwecke genutzt, obwohl es für die Unterdrückung von Mehrdeutigkeiten und zur Erzielung eines höheren Gewinns hilfreich wäre, von der großen Antennenfläche auch sendeseitig zu profitieren. Der Einsatz einer gemeinsamen Sende- und Empfangsantenne würde darüber hinaus die Verwendung bewährter T/R-Technologien (Sende/Empfang-Umschaltung) ermöglichen.

Die Abbildung und/oder Überwachung eines möglichst großen Bereichs mit möglichst hoher geometrischer Auflösung zur Erdbeobachtung erfordert Radarsysteme mit synthetischer Apertur, die über mehrere separate Empfangsaperturen auf einer Trägerplattform oder über mehrere Empfangsantennen auf verschiedenen Trägerplattformen verfügen und somit für jeden gesendeten Hochfrequenzimpuls insgesamt mehrere Echos empfangen können.

Im Allgemeinen sind diese Empfangsaperturen bzw. Empfangsantennen unter anderem in Flugrichtung (= "Azimut"-Richtung) nebeneinander angeordnet, was die Einhaltung einer strengen Bedingung für das Verhältnis von Geschwindigkeit, Größe und Anzahl der Empfangsaperturen des SAR-Sensors in Relation zur Pulswiederholfrequenz PRF erfordert.

Aus dem Artikel P. Lombardo, F. Colone: "An Alternating Transmit Approach for STAP with Short Antenna Arrays" in Radar Conference 2004, Proceedings of the IEEE, Publication Date 26.-29. April 2004, Seiten 420-425, ISSN: 1097-5659, ISBN: 0-7803-8234-X ist eine Lösung zur Verbesserung der Detektion mittels Steigerung des Abstandes zwischen Phasenzentren eines Antennensystems angegeben, bei dem das Phasenzentrum einer Sendeantenne abwechselnd von einem führenden auf ein nachlaufendes Sub-Array der Antenne geschaltet wird. Die in diesem Artikel genannten sendeseitigen Phasenzentren können lediglich zwei feste Positionen einnehmen und sind nicht anpassbar. Dieses bekannte Verfahren erlaubt keinerlei flexible Anpassung der sendeseitigen und folglich der effektiven Phasenzentren an unterschiedliche Werte der Pulswiederholfrequenz.

Zusammenfassend ist also festzustellen, dass Radarsysteme mit synthetischer Apertur (SAR) flexibel einsetzbare Fernerkundungsinstrumente sind, die sich in der Erdbeobachtung bei einer Vielzahl von Anwendungen bewährt haben. Aufgrund ihres Aufnahmeprinzips weisen diese Systeme allerdings eine inhärente Beschränkung auf, die es unmöglich macht, große Gebiete abzubilden und dabei gleichzeitig eine hohe geometrische Auflösung zu erzielen.

Diese Beschränkung kann durch sogenannte Multi-Apertur-SAR-Systeme gelöst werden, die empfangsseitig über mehrere separate Empfangsaperturen bzw. Empfangsantennen verfügen, die in Flugrichtung (= "Azimut"-Richtung) der Trägerplattform bzw. der Trägerplattformen hintereinander angeordnet sind. Eine grundlegende Beschränkung solcher Systeme besteht jedoch in der Notwendigkeit, Geschwindigkeit, Größe und Anzahl der separaten Empfangsaperturen bzw. Empfangsantennen des Radarsensors und die verwendete Pulswiederholfrequenz PRF des Systems fein aufeinander abzustimmen (sogenannte "Bedingung für äquidistante Abtastung"). Andernfalls erfolgt eine Verschlechterung der Qualität des aufgenommenen Radarbildes.

Aus SEDEHI ET AL: "A study for a space-based passive Multichannel SAR", RIUNIONE 2007 GTTI, 19. Juni 2007 (2007-06-19), Seiten 1-6, XP00790348, Roma, Section "%. Enhanced imaging" ist ein SAR-Radarverfahren bekannt, das seine Veränderung der effektiven Phasenzentren durch das selektive Abschalten einzelner Teile der Empfangsantenne erlaubt. Durch dieses Verfahren lässt sich die optimale ("uniform") Pulswiederholfrequenz ("PRF") des Systems adaptiv und rekonfigurierbar einstellen (Seite 8, rechte Spalte, oben: "The basic idea is the adaptive selection of the dual-receiving channel configuration which allows [...] to vary the corresponding uniform PRF" des zuvor genannten Artikels). Somit erlaubt das bekannte Verfahren eine Abstimmung auf eine bestimmte Pulswiederholfrequenz durch eine Anpassung der Empfangsseite der Antenne, ohne dass dabei eine Anpassung/Veränderung der Sendeantenne im laufenden Betrieb des Radar-Sensors stattfände. Daneben wird eine feste Konfiguration für eine ganz bestimmte Pulswiederholfrequenz vor dem Betrieb des Radars "eingestellt" und während des Betriebs des Systems mit eben dieser Pulswiederholfrequenz nicht verändert.

Beschreibung der Erfindung

Aufgabe der Erfindung ist es, diese strengen Anforderungen und Beschränkungen zu überwinden und damit die Flexibilität und Leistungsfähigkeit zukünftiger abbildender SAR-Verfahren entscheidend zu verbessern.

Gemäß der Erfindung, die sich auf ein Synthetik-Apertur-Radarverfahren der eingangs genannten Art bezieht, wird diese Aufgabe durch die Merkmale des Anspruchs 1 gelöst.

Bei einem auf der Empfangsseite in Azimut-Richtung über mehrere Empfangsantennenaperturen verfügenden Multi-Apertur-SAR-System löst die vorliegende Erfindung die angegebene Aufgabe durch ein neuartiges Konzept für den Aufbau und den Betrieb des Sendeantennensystems. Das neuartige Konzept erlaubt es, das elektrisch wirksame Zentrum des Sendeantennensystems, also dessen sogenanntes "Phasenzentrum", während der Aufnahme flexibel zu verändern.

Daraus ergibt sich die Möglichkeit, durch eine kontinuierliche Anpassung des Sendeantennen-Phasenzentrums die Abweichungen von der empfangsseitig vorgegebenen strengen Bedingung für äquidistante Abtastung zu kompensieren. Das erlaubt den streng vorgegebenen Zusammenhang von Geschwindigkeit, Größe und Anzahl der SAR-Sensor-Elemente und der Pulswiederholfrequenz PRF zu lockern und die infolge einer Verletzung der Bedingung auftretenden negativen Auswirkungen auf die Qualität des Bildes zu mindern.

Vorteilhafte und zweckmäßige Weiterbildungen des Synthetik-Apertur-Radarsystems nach der vorliegenden Erfindung sind in den Unteransprüchen angegeben, die sich unmittelbar oder mittelbar auf den Patentanspruch 1 beziehen.

Beschreibung der Zeichnung

Es zeigen:

Fig.1 in schematischer Ansicht ein bereits eingangs be- schriebenes konventionelles Multi-Apertur-SAR-System, bei dem sich ein Sensor mit konstanter Geschwindig- keit $v_s$ entlang der Azimut-Richtung bewegt und die Sendeantenne dabei zu drei aufeinanderfolgenden Zeit- punkten $t_0$, $t_1$ und $t_2$ mit einer Pulswiederholfrequenz PRF Impulse aussendet, die am Boden zurückgestreut und von jeder der beispielhaft drei Empfangsaperturen aufgenommen werden,

Fig.2 wie bereits vorher beschrieben, die Azimut-Positio- nen $x$ von beispielhaft drei Empfangsaperturen und einer Sendeapertur auf einer Trägerplattform ("Apertur-Position") und die Positionen der zuge- hörigen effektiven Phasenzentren, die den Ort des Abtastwertes bestimmen ("Position-Abtastwert"),

Fig.3 wie ebenfalls bereits vorher beschrieben, die Azi- mut-Positionen x von beispielhaft drei Empfangsan- tennen auf separaten Trägern ("Apertur-Position") und die Positionen der zugehörigen effektiven Pha- senzentren, die den Ort des Abtastwertes bestimmen ("Position-Abtastwert"),

Fig.4 wie ebenfalls bereits vorher beschrieben, die räumli- che Abtastung für eine gesendete Impulsfolge für eine empfangsseitige Multi-Apertur-SAR-Antenne auf einer Trägerplattform,

Fig.5 wie ebenfalls bereits vorher beschrieben, die räum- liche Abtastung für eine gesendete Impulsfolge für mehrere Empfangsantennen auf separaten Träger- plattformen,

Fig.6 wie ebenfalls bereits vorher beschrieben, eine äqui- distante Abtastung, wobei Abtastwerte für drei aufei- nander folgende Impulse (gepunktet, durchgezogen, ge- strichelt) in einem System mit drei Empfängern dar- gestellt sind und der Abstand zwischen zwei Sendeim- pulsen genau der halben Antennenlänge entspricht,

Fig.7 wie ebenfalls bereits vorher beschrieben, eine nicht-äquidistante Abtastung für eine zu niedrige Pulswiederholfrequenz *PRF*, wobei Abtastwerte für drei aufeinander folgende Impulse (gepunktet, durchgezogen, gestrichelt) in einem System mit drei Empfängern dargestellt sind,

Fig.8 wie ebenfalls bereits vorher beschrieben, eine nicht-äquidistante Abtastung für eine zu hohe Pulswiederholfrequenz *PRF*, wobei Abtastwerte für drei aufeinander folgende Impulse (gepunktet, durchgezogen, gestrichelt) in einem System mit drei Empfängern dargestellt sind,

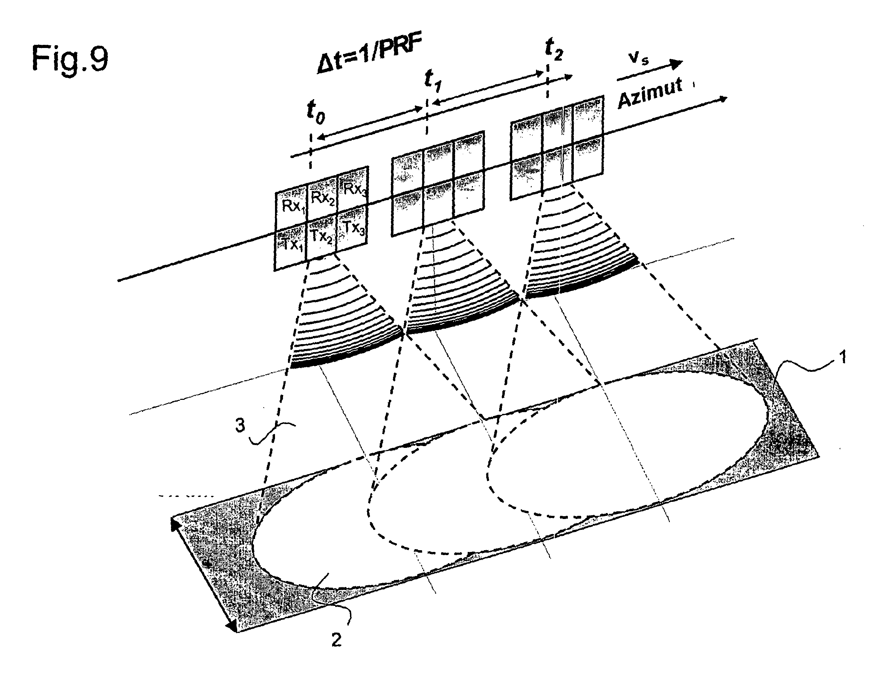

Fig.9 ein Systemkonzept gemäß der vorliegenden Erfindung mit Multi-Element-Sendeantenne im Vergleich zu dem in Fig.1 dargestellten konventionellen SAR-System, wobei im Gegensatz zum konventionellen Ansatz die Antenne mehrere, separat ansteuerbare Sendeanten- nenelemente aufweist,

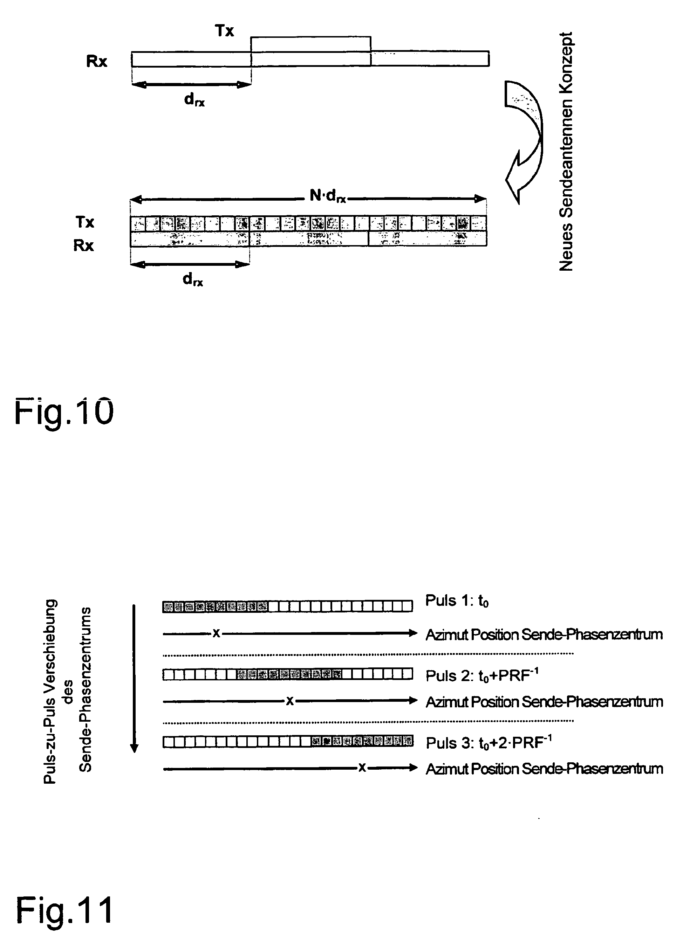

Fig.10 den Übergang von einer einfachen Sendeantenne zu einer Sendeantenne mit einer Vielzahl von separat ansteuerbaren Sendeantennenelementen, beispielhaft kombiniert mit drei Empfangsaperturen, für ein SAR- System gemäß der vorliegenden Erfindung,

Fig.11 verschiedene resultierende Phasenzentren in Azi- mut-Richtung für drei verschiedene Ansteuerungen der Sendeantenne für ein SAR-System gemäß der vor- liegenden Erfindung, wobei jeweils aktive Sendean- tennenelemente grau schattiert und inaktive Sende- antennenelemente transparent gehalten sind,

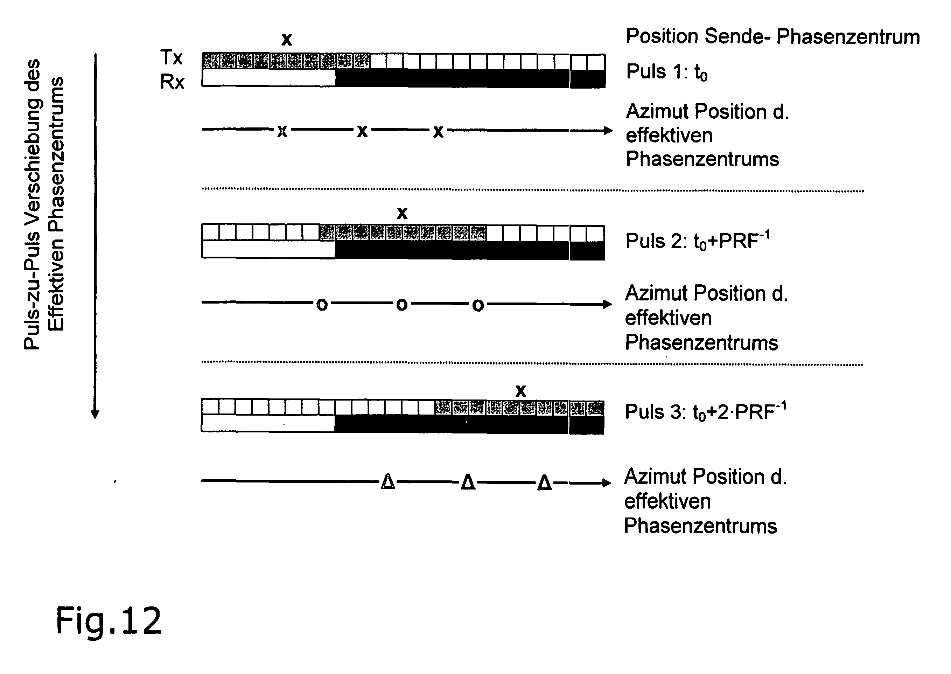

Fig.12 effektive Phasenzentren einer Sende-/Empfangsanten- nenkombination für drei verschiedene, von Puls-zu- Puls aufeinander folgende Sende-Phasenzentren,

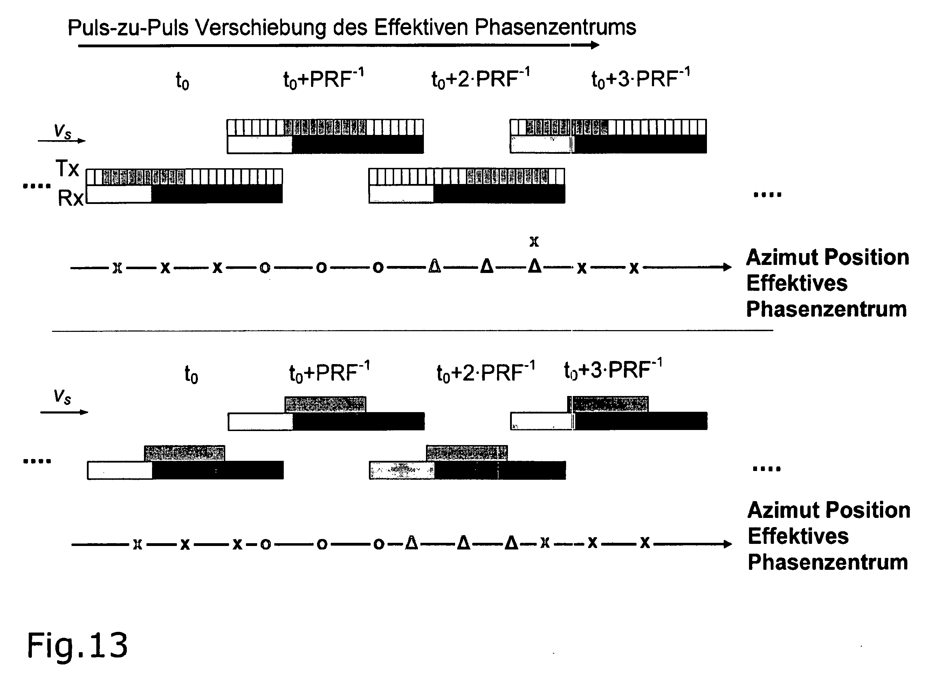

Fig.13 einen Vergleich der Abtastwerte mit (oberer Figuren- teil) und ohne (unterer Figurenteil) Puls-zu-Puls- Verschiebung des sendeseitigen Phasenzentrums für ei- nen vollen Zyklus der Verschiebung, wobei die Posi- tion des Sendephasenzentrums auf der Antenne zum Zeitpunkt $t_0$ also der Position zum Zeitpunkt $t_0 + 3 \cdot PRF^{-1}$ entspricht und es die Steuerung des Sende- Phasenzentrums von Puls zu Puls ermöglicht, eine ur- sprünglich nicht-äquidistante Abtastung (unterer Fi- gurenteil) in eine äquidistante Abtastung (oberer Fi- gurenteil) überzuführen,

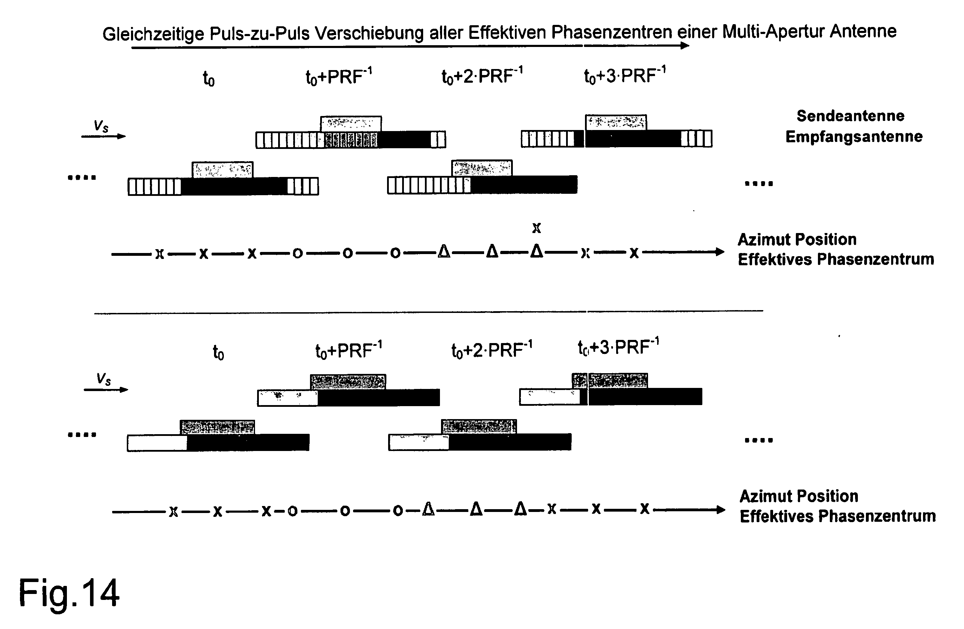

Fig.14    im oberen Darstellungsteil eine Anpassung der Posi- tion der effektiven Phasenzentren durch eine Puls-zu-Puls-Verschiebung aller Phasenzentren der Multi-Aper- tur-Empfangsantenne und eine resultierende äquidis- tante Abtastung und im unteren Darstellungsteil im Vergleich dazu die sich ergebende nicht-äquidistante Abtastung für eine konventionell aufgebaute und be- triebene Multi-Apertur-SAR-Antenne, und

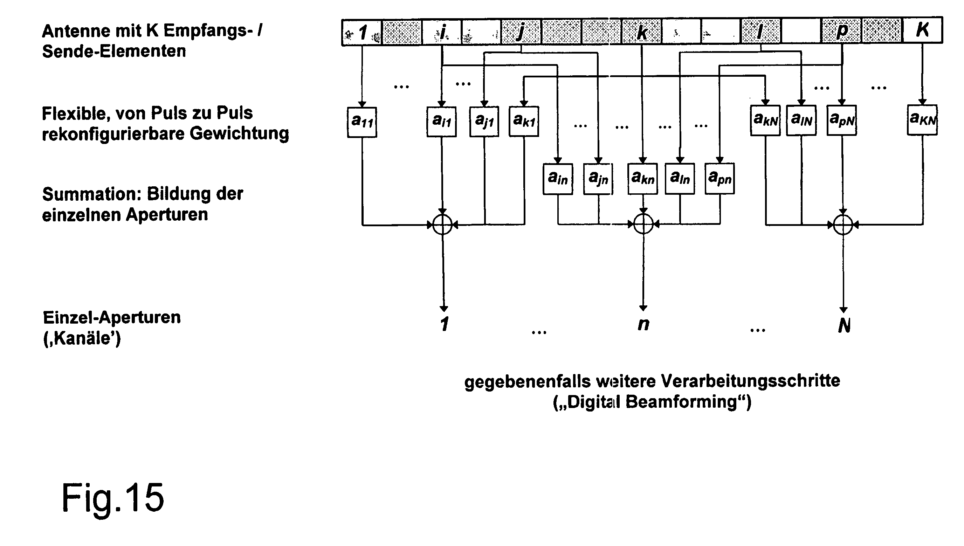

Fig.15    eine Hardware-Architektur zur flexiblen Positionie- rung von einzelnen Sende- oder Empfangsaperturen, wo- bei die K Einzelelemente der Antenne zur "Verwendung" in jeder der N Einzel-Aperturen (Kanäle) unterschied- lich und rekonfigurierbar gewichtet und summiert wer- den und weitere Verarbeitungsschritte, wie z.B. eine sogenannte "Digitale Strahlformung" folgen können.

Beschreibung der Erfindung

Wie bereits im vorangegangenen Beschreibungstext bezeichnet im Folgenden ein Element die kleinste Einheit einer Antenne, das separat angesteuert werden kann. Die Signale, die von den Elementen empfangen oder gesendet werden, werden schließlich gruppenweise zu Aperturen zusammengefasst. Eine einzelne Apertur kann dann separat als Antenne verwendet werden oder mehrere Aperturen auf derselben Trägerplattform bilden eine Multi-Apertur-Antenne.

Grundlage der vorliegenden Erfindung ist ein SAR-System, das auch sendeseitig über eine Antenne verfügt, die eine Anzahl von separaten Sendeelementen aufweist, welche sich einzeln ansteuern lassen. Im einfachsten Fall handelt es sich dabei um ein Ein- oder Ausschalten des Elements; es ist aber auch denkbar, jedes Element mit einer variablen Phasen- und/oder Amplitudenbelegung anzusteuern und so ein "Tapering" der Antennencharakteristik zu erzielen, wie dies aus Fig.9 und Fig.10 hervorgeht.

Im Gegensatz zu dem in Fig.1 dargestellten Systemansatz weist das in Fig.9 gezeigte, grundsätzlich ansichtsgleiche Antennensystem mehrere, separat ansteuerbare Sendeelemente $Tx_1$ bis $Tx_3$ auf. Dabei ist es unerheblich, ob es sich um reine Sendeelemente handelt oder ob auf bewährte T/R-Technologie, d.h. Sende-/Empfangsumschaltung, zurückgegriffen wird, um die Größe der Empfangsantenne auch für die Sendeantenne zu nutzen. Aus Gründen der Übersichtlichkeit wird in den folgenden Figuren jedoch beispielhaft ein System mit getrennten Sende- und Empfangselementen gezeigt.

Fig.10 zeigt den Übergang von einer einfachen, im mittleren Teil der gesamten Ausdehnung der Empfangsantenne Rx liegenden Sendeantenne Tx (oberer Teil von Fig.10) zu einer Sendeantenne mit einer Vielzahl von separat ansteuerbaren Sendeelementen (als Kästchen im unteren Teil von Fig.10 dargestellt), die über die gesamte Empfangsantennenapertur Rx verteilt sind. Die Ausdehnung der drei mittleren Bereiche der Empfangsantenne Rx beträgt jeweils $d_{rx}$. Im dargestellten Beispiel ist $N=3$.

Im Vergleich zum bisherigen Stand der Technik bei Multi-Apertur-SAR-Systemen erlaubt nun eine solche Antenne ein variables Ansteuern der Sendeelemente in einer solchen Weise, dass nur ausgewählte Bereiche der Antenne genutzt werden. Das Phasenzentrum der Antenne befindet sich dann im geometrischen Schwerpunkt der genutzten Elemente. Daraus ergibt sich die durch die vorliegende Erfindung geschaffene Möglichkeit, das Phasenzentrum der Sendeantenne zu verschieben.

Fig.11 zeigt, wie eine Veränderung der Ansteuerung einen definierten Versatz des Phasenzentrums der Sendeantenne von Puls-zu-Puls nach sich zieht. Es sind dort untereinander verschiedene resultierende Sendeantennen- Phasenzentren in Azimut-Richtung für drei verschiedene Ansteuerungen der Sendeantenne dargestellt. Jeweils aktive Sendeantennen-Elemente sind als grau schattierte, inaktive Elemente als transparent gehaltene Kästchen dargestellt.

Im Folgenden wird erläutert, auf welche Weise es diese neuartige Technik gemäß der vorliegenden Erfindung erlaubt, eine nicht-äquidistante Abtastung zu kompensieren und somit durch eine verbesserte Unterdrückung von Azimut- Mehrdeutigkeiten und ein verbessertes Signal/Rausch-Verhältnis *SNR* die Qualität des Radarbildes zu verbessern.

Daneben erwächst weiteres Potential aus der üblicherweise längeren Sendeantenne, die an die Ausmaße der ohnehin langen Empfangsantenne angepasst wird. Oder es wird durch bewährte T/R-Technologie die gleiche Antenne sowohl zum Senden als auch zum Empfangen genutzt. Dies bietet die Möglichkeit, längere Sendeaperturen als bisher in Verbindung mit einem geeigneten Tapering zu nutzen, um somit die abgestrahlte Signalenergie besser auf die gewünschten Gebiete am Boden konzentrieren zu können, was schlussendlich verminderte Azimut-Mehrdeutigkeiten und ein verbessertes Signal/Rausch-Verhältnis *SNR* und somit eine verbesserte Qualität des Radarbildes zur Folge hat.

In Verbindung mit einer Multi-Apertur-SAR-Empfangsantenne ergeben sich, wie bereits eingangs erwähnt, die effektiven Phasenzentren der Sende-/Empfangsantennenkombination in der Mitte zwischen den Phasenzentren der Sendeantenne und der jeweiligen Empfangsantenne. Man erkennt, dass ein Puls-zu-Puls-Verschieben des Phasenzentrums der Sendeantenne alle zum Sendeimpuls gehörenden Abtastwerte um die Hälfte der Versatzes des Sendeantennen-Phasenzentrums verschiebt, wie in den drei untereinander liegenden Teilen von Fig.12 exemplarisch für ein System mit drei Empfangsaperturen und für drei verschiedene Belegungen der Sendeantenne gezeigt ist.

Das bedeutet, dass es die durch die vorliegende Erfindung geschaffene Technik im Vergleich zu derjenigen der bisherigen SAR-Systeme nun ermöglicht, die Position der zu einem Sendeimpuls gehörenden Abtastwerte innerhalb gewisser Grenzen durch eine geeignete Ansteuerung der Sendeantenne zu verschieben. Somit ergibt sich die Möglichkeit, durch eine konstante Verschiebung von Impuls zu Impuls die Lage der Abtastwerte jeweils um die Hälfte des jeweiligen Versatzes zu verschieben.

Dadurch lässt sich eine ungünstige, nicht-äquidistante Lage der Abtastwerte, die aus einer für ein gegebenes SAR-Radarsystem nicht-optimalen Pulswiederholfrequenz PRF resultiert, für jeden Puls kompensieren oder sogar vollständig korrigieren, was lediglich durch das Umschalten des Sendeantennen-Phasenzentrums gestört wird, wenn die maximale Verschiebung am Rand der Sendeantenne erreicht ist. Damit lässt sich erreichen, dass alle Abtastwerte den gleichen Abstand aufweisen und somit selbst für nicht-optimale *PRF*-Werte - in einer gewissen Bandbreite - eine äqui-distante Abtastung gewährleistet ist.

Fig.13 zeigt einen Fall, in dem die Pulswiederholfrequenz *PRF* im Vergleich zur optimalen Pulswiederholfrequenz *PRF* zu hoch ist, d.h. der jeweils letzte (rechte) Abtastwert in Flugrichtung (schwarze Empfangsapertur) rückt zu nahe an den jeweils ersten (linken) Abtastwert (hellgraue Empfangsapertur) heran, da sich die Antenne noch nicht "weit genug" weiterbewegt hat, wenn der nächste Impuls gesendet wird.

In diesem Fall ermöglicht ein stückweise vorgenommenes, an die Pulswiederholfrequenz *PRF* angepasstes Verschieben des Sendeantennen-Phasenzentrums von Puls zu Puls, die gesamten Abtastwerte entsprechend in Flugrichtung zu verschieben, um letztendlich wieder äquidistant verteilte Abtastwerte zu erhalten.

Damit lassen sich vor allem zu hohe *PRF*-Werte praktisch in eine äquidistante Abtastung überführen, da hier das Phasenzentrum in Flugrichtung wandert und somit beim Umschalten des Phasenzentrums von der äußersten rechten Position (in Flugrichtung "vorne") zur äußersten linken Position (in Flugrichtung "hinten") lediglich einige sich überlappende Abtastwerte (vgl. Fig.13) nicht beachtet werden müssen. In Fig.13 ist beispielhaft ein Szenario gewählt, bei dem nach drei Impulsen gerade der Zeitpunkt des Umschaltens erreicht ist.

Im Einzelnen zeigt Fig.13 einen Vergleich der Abtastwerte mit (oberer Figurenteil) und ohne (unterer Figurenteil) Puls-zu-Puls-Verschiebung des sendeantennenseitigen Phasenzentrums für einen vollen Zyklus der Verschiebung, wobei die Position des Sendephasenzentrums auf der Antenne zum Zeitpunkt $t_0$ der Position zum Zeitpunkt $t_0+3 \cdot PRF^{-1}$ entspricht. Die Steuerung des Sende-Phasenzentrums von Puls zu Puls ermöglicht es, eine ursprünglich nicht-äquidistante Abtastung (unterer Figurenteil) in eine äquidistante Abtastung (oberer Figurenteil) überzuführen.

Analog lassen sich auch zu niedrige *PRF*-Werte im Vergleich zum optimalen Wert korrigieren, indem das Sende-Phasenzentrum von Puls zu Puls gegen die Flugrichtung verschoben wird, um den zu großen Abstand zwischen "letztem" Abtastwert des einen Impulses und "erstem" Abtastwert des darauffolgenden Impulses auszugleichen. In diesem Fall ergibt sich jedoch eine kleine Lücke in den Abtastwerten beim Umschalten des Phasenzentrums von der äußersten linken Position zur äußersten rechten Position, die jedoch zu einer deutlich geringeren Leistungseinbuße führt, als es für ein konstantes sendeseitiges Phasenzentrum der Fall wäre.

Dabei gilt, dass der kompensierbare PRF-Bereich umso größer ist, je größer die maximal mögliche Verschiebung des Phasenzentrums ist, d.h. schlussendlich je größer die Antenne ist. Die Feinheit der Steuerung des Phasenzentrums wird umso besser, je kleiner das einzelne Element ist, da dadurch die minimal mögliche Schrittweite der Verschiebung zwischen den Impulsen festgelegt wird.

In Verbindung mit einer empfangsseitigen digitalen Strahlformung, wie sie aus dem Stand der Technik bekannt ist, kann so z.B. durch die Verschiebung des Phasenzentrums eine "grobe" Einstellung vorgenommen werden und die Feinkorrektur durch die Prozessierung erfolgen. In anderen Worten könnte man sagen, dass die Möglichkeit der Puls-zu-Puls-Anpassung des sendeseitigen Phasenzentrums die Flexibilität und die Anwendungsbreite bestehender Multi-Apertur-SAR-Systeme deutlich erweitert.

Der der vorliegenden Erfindung zu Grunde liegende Gedanke einer Puls-zu-Puls-Anpassung der Position des effektiven Phasenzentrums zur Erzielung einer möglichst äquidistanten Abtastung lässt sich natürlich auch auf die Empfangsseite und auch auf mehrere Aperturen einer Multi-Apertur-SAR-Antenne gleichzeitig anwenden. Somit lässt sich das Prinzip auf das gesamte SAR-System erweitern, da es für die resultierende räumliche Abtastung prinzipiell unerheblich ist, ob nur die sende-, nur die empfangsseitigen oder sowohl die sende- als auch empfangsseitigen Pha-senzentren verschoben werden.

So ist in einem weiteren Ausführungsbeispiel eine etwas verlängerte Empfangsantenne denkbar, die eine adaptive Anpassung der Positionen der Phasenzentren aller Kanäle einer Multi-Apertur-SAR-Empfangsantenne erlaubt, vgl. Fig.14. Im Allgemeinen wird in diesem Fall zwar das Verhältnis zwischen verwendeter und unbenutzter Antennenfläche etwas ungünstiger sein als im vorhergehend beschriebenen Fall der sendeantennenseitigen Anpassung. Ungeachtet der etwas geringeren Flexibilität bietet aber auch die empfangsantennenseitige Puls-zu-Puls-Verschiebung die Möglichkeit, die Lage der effektiven Phasenzentren anzupassen. Das Vorgehen ist analog zu der anhand Fig.13 beschriebenen Prozedur.

Fig.14 illustriert das Verfahren der empfangsseitigen Puls-zu-Puls-Verschiebung. Im Einzelnen zeigt Fig.14 im oberen Figurenteil eine Anpassung der Position der effektiven Phasenzentren durch eine Puls-zu-Puls-Verschiebung aller Phasenzentren der Multi-Apertur-Empfangsantenne und die daraus resultierende äquidistante Abtastung. Der untere Figurenteil von Fig.14 zeigt im Vergleich dazu die sich ergebende nicht-äquidistante Abtastung für eine konventionell aufgebaute und betriebene Multi-Apertur-SAR-Antenne.

Die prinzipielle Architektur der Hardware, die - sowohl sende- als auch empfangsseitig - erforderlich ist, um eine solche flexible Verschiebung zu ermöglichen, zeigt Fig.15. Der aus $K$ einzelnen Elementen bestehenden Antenne ist ein Netzwerk von Filtern zur Gewichtung und anschließenden Kombination der Signale zu $N$ Aperturen ("Kanäle") nachgeschaltet. Im allgemeinen Fall erlaubt dieses Netzwerk, dass jedes der $K$ Elemente gleichzeitig und mit jeweils individueller Gewichtung zur Bildung von bis zu $N$ Aperturen beiträgt.

Dabei ist es möglich, sowohl diese Verarbeitung mit dem empfangenen und verstärkten HF-Signal vor der Abtastung durchzuführen als auch das Signal zuerst analog/digital zu wandeln und anschließend die obige Verarbeitung am digitalisierten Signal vorzunehmen. Im Einzelnen zeigt Fig.15 also eine Hardware-Architektur zur flexiblen Positionierung von einzelnen Sende- oder Empfangsaperturen. Die $K$ Einzelelemente ("Kanäle") der Antenne können zur "Verwendung" in jeder der $N$ Einzel-Aperturen unterschiedlich und rekonfigurierbar gewichtet und summiert werden. Weitere Verarbeitungsschritte wie z.B. eine digitale Strahlformung können folgen.

Wie in Fig.15 dargestellt, ermöglicht eine solche Hardware-Architektur auch ein gegenseitiges Überlappen einzelner Empfangsaperturen, indem die Signale einzelner Empfangselemente schließlich in mehreren Aperturen "verwendet" werden. Dies erhöht die Flexibilität zur Anpassung der Phasenzentrumsposition weiter und erlaubt z.B. auch die Veränderung der Positionen der einzelnen Phasenzentren einer Multi-Apertur-SAR-Antenne zueinander.

In einem weiteren Schritt ist es prinzipiell möglich, die Gewichtskoeffizienten $a_{ij}$ als frequenzabhängige Filterfunktionen $a_{ij}(f)$ zu wählen.

Schließlich ist es auch möglich, gleichzeitig sende- und empfangsantennenseitig eine Anpassung der Phasenzentren zu ermöglichen, was eine weitere Erhöhung der Flexibilität des SAR-Systems zur Folge hat.

Sämtliche vorstehend vorgeschlagenen Ausführungsbeispiele eignen sich dabei zu einer Kombination mit einer nachfolgenden empfangsseitigen digitalen Strahlformung, was die Leistungsfähigkeit und Flexibilität des SAR-Systems weiter erhöht.

Das durch die vorliegende Erfindung geschaffene, neuartige Antennensteuerungskonzept ermöglicht also durch die Puls-zu-Puls-Verschiebung des sendeseitigen Phasenzentrums in Azimut-Richtung eine Kompensation oder vollständige Korrektur nicht-äquidistanter Abtastung in Azimut-Richtung. Der Gedanke der Puls-zu-Puls-Verschiebung der Position des effektiven Phasenzentrums zur Erzielung einer möglichst äquidistanten Abtastung kann dabei auf die Empfangsantennenseite und auf Multi-Apertur-Antennen erweitert werden.

Gerade in Verbindung mit einer anschließenden empfangsantennenseitigen digitalen Strahlformung gemäß dem bisherigen Stand der Technik bietet die vorgeschlagene Technik großes Potential um die Leistungsfähigkeit von Multi-Apertur-SAR-Systemen weiter zu verbessern. In Verbindung mit einer verbesserten Ausleuchtung des gewünschten Gebiets am Boden durch die vergrößerte Antenne ergibt sich eine deutliche Verbesserung der Bildqualität.

**Bezugszeichenliste**

| | |
|---|---|
| 1 | Bodenstreifen |
| 2 | Auftrefffläche |
| 3 | Antennenkeule |
| $d_{rx}$ | Einzelaperturabmessung in Azimut-Richtung |
| $PRF$ | Pulswiederholfrequenz |
| Rx | Empfangsantenne; Empfangsantennensystem |
| $Rx_1$, $R_{x2}$, $Rx_3$ | Aperturen des Empfangsantennensystems |
| $t_0$, $t_1$, $t_2$ | Impulsaussendezeiten |
| Tx | Sendeantenne; Sendeantennensystem |
| $Tx_1$, $Tx_2$, $Tx_3$ | Aperturen des Sendeantennensystems |
| $v_s$ | Geschwindigkeit der Trägerplattform |
| $x$ | Azimutposition |

**Patentansprüche**

1. Synthetik-Apertur-Radarverfahren zur Fernerkundung der Erdoberfläche unter Verwendung einer oder mehrerer, sich mit konstanter Geschwindigkeit über der Erdoberfläche bewegender Trägerplattformen mit einem orthogonal zur Bewegungsrichtung und damit zur Azimut-Richtung schräg nach unten blickenden, aus einem Sende- und Empfangsantennensystem bestehenden, in Azimut-Richtung strahlsteuerbaren Multi-Apertur-Antennensystem, und einer kohärent arbeitenden Radarvorrichtung, die über das Sendeantennensystem periodisch mit einer Pulswiederholfrequenz Hochfrequenz-Sendeimpulse aussendet und die über das Empfangsantennensystem Echosignale empfängt, wobei sich effektive Azimut-Phasenzentren, die den als Abtastwerte bezeichneten, empfangenen Echosignalen zugeordnet sind, an einem räumlichen Ort in Azimut-Richtung befinden, der dem geometrischen Mittelpunkt zwischen dem tatsächlich bei der Aussendung der Hochfrequenzimpulse elektrisch wirksamen Phasenzentrum des Sendeantennensystems und dem tatsächlich beim Empfang der Echosignale elektrisch wirksamen Phasenzentrum des Empfangsantennensystems entspricht, **dadurch gekennzeichnet, dass** durch eine in Azimut-Richtung oder entgegengesetzt dazu, von Sendeimpuls zu Sendeimpuls erfolgende Lageverschiebung des elektrisch wirksamen Phasenzentrums des als in Azimut-Richtung strahlsteuerbare Multi-Apertur-Antenne ausgebildeten Sendeantennensystems ($Tx$; $Tx_1$, $Tx_2$, $Tx_3$) und optional des elektrisch wirksamen Phasenzentrums des als in Azimut-Richtung strahlsteuerbare Multi-Apertur-Antenne ausgebildeten Empfangsantennensystems ($Rx$; $Rx_1$, $Rx_2$, $Rx_3$) die Position des effektiven Azimut-Phasenzentrums kontinuierlich so angepasst wird, dass sich bei der bestehenden Pulswiederholfrequenz (PRF) eine annähernd äquidistante Abtastung entlang der Azimut-Richtung ergibt.

2. Radarverfahren nach Anspruch 1, **dadurch gekennzeichnet, dass** bei Verwendung eines aus einer Vielzahl von separaten Antennenelementen bestehenden Sendeantennensystems ($Tx$; $Tx_1$, $Tx_2$, $Tx_3$) und eines aus einer Vielzahl von separaten Antennenelementen bestehenden Empfangsantennensystems ($Rx$; $Rx_1$, $Rx_2$, $Rx_3$) die Antennenelemente zur Strahlsteuerung des jeweiligen Antennensystems einzeln angesteuert werden.

3. Radarverfahren nach Anspruch 2, **dadurch gekennzeichnet, dass** die Ansteuerung der Antennenelemente in einem Ein- und Ausschalten dieser Antennenelemente besteht.

4. Radarverfahren nach Anspruch 2, **dadurch gekennzeichnet, dass** die Ansteuerung der Antennenelemente darin besteht, dass jedem Antennenelement eine variable Phasen- und/oder Amplitudenbelegung zugeteilt wird, um ein "Tapering" der Antennencharakteristik zu erreichen.

5. Radarverfahren nach einem der Ansprüche 2 bis 4, **dadurch gekennzeichnet, dass** bei Verwendung von gemeinsamen Antennenelementen für das Sende- und für das Empfangsantennensystem ($Tx$; $Tx_1$, $Tx_2$, $Tx_3$; $Rx$; $Rx_1$, $Rx_2$, $Rx_3$) gemeinsame Antennenelemente verwendet werden, die Antennenelemente mittels Sende-/ Empfangsschalter in T/R-Technologie zwischen Sende- und Empfangsbetrieb umgeschaltet werden.

6. Radarverfahren nach einem der Ansprüche 2 bis 5, **gekennzeichnet durch** eine Ansteuerung der Antennenelemente derart, dass nur ausgewählte Bereiche des Sende- und Empfangsantennensystems ($Tx$; $Tx_1$, $Tx_2$, $Tx_3$; $Rx$; $Rx_1$, $Rx_2$, $Rx_3$) genutzt werden, so dass sich das elektrisch wirksame Phasenzentrum des jeweiligen Antennensystems im geometrischen Schwerpunkt der genutzten Antennenelemente befindet.

7. Radarverfahren nach einem der Ansprüche 2 bis 6, **dadurch gekennzeichnet, dass** in einer Netzwerkarchitektur von Filtern, die sich an die das Sende- und das Empfangsantennensystem ($Tx$; $Tx_1$, $Tx_2$, $Tx_3$; $Rx$; $Rx_1$, $Rx_2$, $Rx_3$) bildenden Antennenelemente anschließt, die Signale gewichtet und anschließend zu mehreren Aperturen kombiniert werden, wobei empfangsseitig diese Verarbeitung mit dem empfangenen und verstärkten Hochfrequenz-Echosignal vor der Abtastung, aber auch nach einer Analog/Digital-Wandlung am digitalisierten Echosignal durchgeführt wird.

8. Radarverfahren nach Anspruch 7, **dadurch gekennzeichnet, dass** die Netzwerkarchitektur derart arbeitet, dass sich die Aperturen sende- und/oder empfangsseitig gegenseitig überlappen, so dass die Hochfrequenz-Sendeimpulse einzelner Sendeantennenelemente bzw. die Echosignale einzelner Empfangsantennenelemente in mehreren Aperturen verwendet werden.

9. Radarverfahren nach Anspruch 7 oder 8, **dadurch gekennzeichnet, dass** die Gewichtskoeffizienten ($a_{ij}$) in der Netzwerkarchitektur als frequenzabhängige Filterfunktionen ($a_{ij}(f)$) gewählt werden.

10. Radarverfahren nach einem der Ansprüche 2 bis 9, **dadurch gekennzeichnet, dass** zur Erzielung einer feinen Steuerung des jeweiligen elektrisch wirksamen Phasenzentrums des Sende- bzw. des Empfangsantennensystems

(Tx; $Tx_1$, $Tx_2$, $Tx_3$; Rx; $Rx_1$, $Rx_2$, $Rx_3$) und damit auch zur feinen Steuerung des effektiven Phasenzentrums möglichst klein bemessene Antennenelemente verwendet werden, da durch die Abmessung der Antennenelemente die minimal mögliche Schrittweite der Verschiebung zwischen den Impulsen festgelegt wird.

**11.** Radarverfahren nach einem der vorhergehenden Ansprüche, **gekennzeichnet durch** eine Vor-Prozessierung der empfangenen und digitalisierten Signale in Azimut-Richtung vor der eigentlichen SAR-Prozessierung in Form einer sogenannten "empfangsseitigen digitalen Strahlformung", die auf einer dopplerfrequenzabhängigen Gewichtung und anschließenden kohärenten Summation der einzelnen Empfangssignale beruht und vor allem dazu dient, **durch** eine nicht-äquidistante Abtastung auftretende Azimut-Mehrdeutigkeiten zu unterdrücken.

**12.** Radarverfahren nach Anspruch 11 und einem der anderen vorhergehenden Ansprüche, **dadurch gekennzeichnet, dass** durch die Verschiebung der elektrisch wirksamen Phasenzentren des Sende- bzw. des Empfangsantennensystems (Tx; $Tx_1$, $Tx_2$, $Tx_3$; Rx; $Rx_1$, $Rx_2$, $Rx_3$) und damit des effektiven Phasenzentrums des gesamten Antennensystems eine grobe Einstellung der äquidistanten Abtastung und durch die Vor-Prozessierung mittels empfangsseitiger digitaler Strahlformung eine Feinkorrektur vorgenommen wird.

**13.** Radarverfahren nach einem der vorhergehenden Ansprüche, **dadurch gekennzeichnet, dass** das Empfangsantennensystem (Rx; $Rx_1$, $Rx_2$, $Rx_3$) im Vergleich zum Sendeantennensystem (Tx; $Tx_1$, $Tx_2$, $Tx_3$) in Azimut-Richtung länger bemessen wird.

## Claims

**1.** A synthetic aperture radar method for remote surveillance of the surface of the earth using one or a plurality of carrier platforms moving at a constant speed over the surface of the earth, wherein said one or plurality of carrier platforms comprise a multi-aperture antenna system beam-controllable in the azimuth direction and directed obliquely downwards orthogonally to the moving direction and thus to the azimuth direction and consisting of a transmitting and receiving antenna system, and further comprise a coherently operating radar device periodically transmitting high-frequency pulses at a pulse-repetition frequency via the transmitting antenna system and receiving echo signals via the receiving antenna system, wherein effective azimuth phase centers which are assigned to the received echo signals referred to as scan values, are arranged at a spatial site in the azimuth direction, which spatial site corresponds to the geometric center between the phase center of the transmitting antenna system that is actually electrically active during the transmission of the high-frequency pulses and the phase center of the receiving antenna system that is actually electrically active during the reception of the echo signals.
**characterized in that**, by a position shift - effected from transmission pulse to transmission pulse in the azimuth direction or opposite thereto - of the electrically active phase center of the transmitting antenna system (Tx;$Tx_1$,$Tx_2$, $Tx_3$) designed as a multi-aperture antenna which is beam-controllable in the azimuth direction, and, optionally, of the electrically active phase center of the receiving antenna system (Rx;$Rx_1$,$Rx_2$,$Rx_3$) designed as a multi-aperture antenna which is beam-controllable in the azimuth direction, the position of the effective azimuth phase center is continuously adapted in such a manner that, at the existing pulse repetition frequency (PRF), a substantially equidistant scanning is effected in the azimuth direction.

**2.** The radar method according to claim 1, **characterized in that**, when using a transmitting antenna system (Tx;$Tx_1$, $Tx_2$,$Tx_3$) consisting of a plurality of separate antenna elements and a receiving antenna system (Rx; $Rx_1$,$Rx_2$,$RX_3$) consisting of a plurality of separate antenna elements, the antenna elements are individually controlled for beam control of the respective antenna system.

**3.** The radar method according to claim 2, **characterized in that** the controlling of the antenna elements consists in switching on and switching off these antenna elements.

**4.** The radar method according to claim 2, **characterized in that** the controlling of the antenna elements consists in assigning to each antenna element a variable phase and/or amplitude assignment for achieving a "tapering" of the antenna characteristic.

**5.** The radar method according to any one of claims 2 to 4, **characterized in that**, in case that common antenna elements are used for the transmitting and the receiving antenna systems (Tx;$Tx_1$,$Tx_2$,$Tx_3$; Rx; $Rx_1$,$Rx_2$,$Rx_3$), the antenna elements are switched between the transmitting and the receiving operation through T/R technology by use of transmitting/receiving switches.

6. The radar method according to any one of claims 2 to 5, **characterized by** control of the antenna elements in such a manner that only selected areas of the transmitting and receiving antenna system (Tx;Tx$_1$,Tx$_2$, T$_{X3}$; Rx; Rx$_1$,Rx$_2$, Rx$_3$) are used, so that the electrically active phase center of the respective antenna system is arranged at the geometric center of gravity of the antenna elements used.

7. The radar method according to any one of claims 2 to 6, **characterized in that**, in a network architecture of filters following the antenna elements comprising the transmitting and receiving antenna system (Tx;Tx$_1$,Tx$_2$, Tx$_3$; Rx; Rx$_1$,Rx$_2$,Rx$_3$), the signals are weighted and then combined to a plurality of apertures, wherein, on the reception side, this processing is performed on the digital echo signal with the received and amplified high-frequency echo signal prior to scanning, but also after a digital/analog conversion.

8. The radar method according to claim 7, **characterized in that** said network architecture is operative in such a manner that the apertures overlap each other on the transmission and/or reception sides so that the high-frequency pulses of individual transmitting antenna elements and respectively the echo signals of individual receiving antenna elements are used in a plurality of apertures.

9. The radar method according to claim 7 or 8, **characterized in that** the weighting coefficients (a$_{ij}$) in the network architecture are selected as frequency-independent filter functions (a$_{ij}$(f)).

10. The radar method according to any one of claims 2 to 9, **characterized in that**, for achieving fine-control of the respective electrically active phase center of the transmitting and respectively receiving antenna system (Tx;Tx$_1$, Tx$_2$,Tx$_3$; Rx; Rx$_1$,Rx$_2$,Rx$_3$) and thus also for fine-control of the effective phase center, use is made of antenna elements of the smallest possible size because, by the size of the antenna elements, the minimally possible step width of the shift between pulses is determined.

11. The radar method according to any one of the previous claims, **characterized by** pre-processing the received and digitized signals in the azimuth direction prior to the actual SAR processing in the form of a so-called "digital beam-forming on the receiving side" which is based on a Doppler-frequency-depending weighting and a subsequent coherent summation of the individual received signals and which serves primarily for suppressing azimuth ambiguities occurring due to non-equidistant scanning.

12. The radar method according to claim 11 and any one of the other previous claims, **characterized in that**, by the shifting of the electrically active phase centers of the transmitting and respectively receiving antenna system (Tx; Tx$_1$,Tx$_2$,Tx$_3$; Rx; Rx$_1$,Rx$_2$,Rx$_3$) and thus of the effective phase center of the whole antenna system, there is performed a rough setting of the equidistant scanning and, through the pre-processing by means of digital beam-forming on the receiving side, a fine correction.

13. The radar method according to any one of the previous claims, **characterized in that** the receiving antenna system (Rx; Rx$_1$,Rx$_2$,Rx$_3$) in comparison to the transmitting antenna system (Tx;Tx$_1$,Tx$_2$,Tx$_3$) is given a longer dimension in the azimuth direction.

**Revendications**

1. Procédé faisant appel à un radar à synthèse d'ouverture pour la télédétection de la surface de la terre en utilisant une ou plusieurs plateformes porteuses se déplaçant au-dessus de la surface de la terre à une vitesse constante, comprenant un système d'antennes à ouvertures multiples regardant dans une direction orthogonale à la direction de déplacement et ainsi dans une direction obliquement vers le bas par rapport à la direction azimutale, le système étant formé par un système d'antennes émettrices et réceptrices et apte à être commandé à rayon dans la direction azimutale, et un dispositif radar à fonctionnement cohérent émettant périodiquement, avec une fréquence de répétition des impulsions, des impulsions d'émission à haute fréquence via le système d'antennes émettrices et recevant des signaux d'écho via le système d'antennes réceptrices, des centres de phase d'azimut effectifs, associés aux signaux d'écho reçus appelés valeurs de balayage, étant situés à un endroit spatial dans la direction azimutale, qui correspond au centre géométrique entre le centre de phase dudit système d'antennes émettrices actuellement effectif électriquement lors de l'emission des impulsions à haute fréquence et le centre de phase dudit système d'antennes réceptrices actuellement effectif électriquement lors de la réception des signaux d'écho, **caractérisé en ce que**, par déplacement, effectué dans la direction azimutale ou dans la direction opposée et d'impulsion d'émission à impulsion d'émission, du centre de phase effectif électriquement du système d'antennes émettrices

(Tx; $Tx_1$; $Tx_2$; $Tx_3$), configuré comme système d'antennes à ouvertures multiples apte à être commandé à rayon dans la direction azimutale, et, en option, du centre de phase effectif électriquement du système d'antennes réceptrices (Rx; $Rx_1$; $Rx_2$; $Rx_3$), configuré comme système d'antennes à ouvertures multiples apte à être commandé à rayon dans la direction azimutale, la position du centre de phase d'azimut effectif est ajustée en continu de sorte qu'il se produit, à la fréquence de répétition des impulsions (PRF) utilisée, un balayage approximativement équidistant suivant la direction azimutale.

2. Procédé de radar selon la revendication 1, **caractérisé en ce que** lors de l'utilisation d'un système d'antennes émettrices (Tx; $Tx_1$; $Tx_2$; $Tx_3$) formé de plusieurs éléments d'antenne séparés et d'un système d'antennes réceptrices (Rx; $Rx_1$; $Rx_2$; $Rx_3$) formé de plusieurs éléments d'antenne séparés, les éléments d'antenne sont contrôlés individuellement pour commander le rayon d'un système d'antenne respectif.

3. Procédé de radar selon la revendication 2, **caractérisé en ce que** les éléments d'antenne sont commandés par activation et désactivation des ces éléments d'antenne.

4. Procédé de radar selon la revendication 2, **caractérisé en ce que** la commande des éléments d'antenne est réalisée par l'assignation d'une occupation de phase et/ou d'amplitude variable à chaque élément d'antenne, afin d'obtenir un "tapering" de la caractéristique d'antenne.

5. Procédé de radar selon l'une quelconque des revendications 2 à 4, **caractérisé en ce que** lors de l'utilisation d'éléments d'antenne communs pour ledit système d'antennes émettrices et réceptrices (Tx; $Tx_1$; $Tx_2$; $Tx_3$; Rx; $Rx_1$; $Rx_2$; $Rx_3$), les éléments d'antenne sont commutés entre le mode d'émission et le mode de réception en utilisant un commutateur d'émission/réception en technologie T/R.

6. Procédé de radar selon l'une quelconque des revendications 2 à 5, **caractérisé en ce que** les éléments d'antenne sont commandés de sorte que seulement des parties choisies dudit système d'antennes émettrices et réceptrices (Tx; $Tx_1$; $Tx_2$; $Tx_3$; Rx; $Rx_1$; $Rx_2$; $Rx_3$) sont utilisées, en sorte que le centre de phase effectif électriquement du système d'antennes respectif est situé au centre de gravité géométrique des éléments d'antenne utilisés.

7. Procédé de radar selon l'une quelconque des revendications 2 à 6, **caractérisé en ce que** dans une architecture de réseau de filtres se joignant aux éléments d'antenne formant ledit système d'antennes émettrices et réceptrices (Tx; $Tx_1$; $Tx_2$; $Tx_3$; Rx; $Rx_1$; $Rx_2$; $Rx_3$), les signaux sont pondérés et ensuite combinés en plusieurs apertures, ce traitement étant effectué, côté récepteur, avant le balayage, avec le signal d'écho à haute fréquence reçu et amplifié, mais est aussi effectué au signal d'écho numérisé après une conversion analogue/numérique.

8. Procédé de radar selon la revendication 7, **caractérisé en ce que** ladite architecture de réseau fonctionne de sorte que les apertures se recouvrent au côté d'émission et/ou réception, en sorte que les impulsions d'émission à haute fréquence d'éléments d'antenne émettrices individuels ou les signaux d'écho d'éléments d'antenne réceptrices individuels sont utilisés dans plusieurs apertures.

9. Procédé de radar selon la revendication 7 ou 8, **caractérisé en ce que** les coefficients pondérateurs ($a_{ij}$) dans l'architecture de réseau sont choisis comme fonctions de filtre ($a_{ij}(f)$) dépendant de la fréquence.

10. Procédé de radar selon l'une quelconque des revendications 2 à 9, **caractérisé en ce que** pour une commande parfaite d'un centre de phase effectif électriquement respectif dudit système d'antennes émettrices et réceptrices (Tx; $Tx_1$; $Tx_2$; $Tx_3$; Rx; $Rx_1$; $Rx_2$; $Rx_3$), et, par cela, aussi pour une commande parfaite du centre de phase effectif, l'on utilise des éléments d'antenne dimensionné aussi petit que possible, parce que les dimensions des éléments d'antenne déterminent le minimum possible de la largeur de pas du déplacement entre les impulsions.

11. Procédé de radar selon l'une quelconque des revendications précédentes, **caractérisé par** le prétraitement des signaux reçus et numérisés dans la direction azimutale avant le traitement SAR propre sous forme d'une "formation de rayon numérique côté récepteur" se basant sur une pondération dépendant de la fréquence Doppler et sur l'addition cohérente ultérieure des signaux de réception individuels et servant surtout à supprimer des ambiguïtés d'azimut se produisant par un balayage non équidistant.

12. Procédé de radar selon la revendication 11 et une quelconque des revendications précédentes, **caractérisé en ce qu'**un ajustage sommaire du balayage équidistant est effectué par le déplacement des centres de phase effectifs électriquement dudit système d'antennes émettrices et réceptrices (Tx; $Tx_1$; $Tx_2$; $Tx_3$; Rx; $Rx_1$; $Rx_2$; $Rx_3$) et, par

cela, du centre de phase effectif de l'ensemble du système d'antennes, et qu'une correction précise est effectuée par le prétraitement utilisant la formation de rayon numérique côté récepteur.

13. Procédé de radar selon l'une quelconque des revendications précédentes, **caractérisé en ce que** le système d'antennes réceptrices (Rx; $Rx_1$; $Rx_2$; $Rx_3$) est plus longue dans la direction azimutale que le système d'antennes émettrices (Tx; $Tx_1$; $Tx_2$; $Tx_3$).

Fig.1

**Fig.2**

**Fig.3**

Fig.4

Fig.5

$\Delta x/2$

$v_s/PRF$

$t_{-1}=t_0-1/PRF$      $t_0$      $t_1=t_0+1/PRF$

Fig.6

$\Delta x/2$

$v_s/PRF$

$t_{-1}=t_0-1/PRF$      $t_0$      $t_1=t_0+1/PRF$

Fig.7

$\Delta x/2$

$v_s/PRF$

$t_{-1}=t_0-1/PRF$      $t_0$      $t_1=t_0+1/PRF$

Fig.8

Fig.9

$\Delta t = 1/PRF$

$t_0$  $t_1$  $t_2$

$v_s$

Azimut

$Rx_1$ $Rx_2$ $Rx_3$

$Tx_1$ $Tx_2$ $Tx_3$

1

2

3

EP 2 191 297 B1

Fig.10

Fig.11

Position Sende- Phasenzentrum

Puls 1: $t_0$

Azimut Position d.
effektiven
Phasenzentrums

Puls 2: $t_0+PRF^{-1}$

Azimut Position d.
effektiven
Phasenzentrums

Puls 3: $t_0+2\cdot PRF^{-1}$

Azimut Position d.
effektiven
Phasenzentrums

Tx
Rx

Puls-zu-Puls Verschiebung des
Effektiven Phasenzentrums

# Fig.12

**Puls-zu-Puls Verschiebung des Effektiven Phasenzentrums**

$t_0$  $t_0+PRF^{-1}$  $t_0+2\cdot PRF^{-1}$  $t_0+3\cdot PRF^{-1}$

Azimut Position
Effektives
Phasenzentrum

$t_0$  $t_0+PRF^{-1}$  $t_0+2\cdot PRF^{-1}$  $t_0+3\cdot PRF^{-1}$

Azimut Position
Effektives
Phasenzentrum

Fig.13

EP 2 191 297 B1

Gleichzeitige Puls-zu-Puls Verschiebung aller Effektiven Phasenzentren einer Multi-Apertur Antenne

$t_0$   $t_0+PRF^{-1}$   $t_0+2\cdot PRF^{-1}$   $t_0+3\cdot PRF^{-1}$

$v_s$

**Sendeantenne**
**Empfangsantenne**

····

····

**Azimut Position**
**Effektives Phasenzentrum**

$t_0$   $t_0+PRF^{-1}$   $t_0+2\cdot PRF^{-1}$   $t_0+3\cdot PRF^{-1}$

$v_s$

····

····

**Azimut Position**
**Effektives Phasenzentrum**

Fig.14

EP 2 191 297 B1

EP 2 191 297 B1

**Antenne mit K Empfangs- /
Sende-Elementen**

**Flexible, von Puls zu Puls
rekonfigurierbare Gewichtung**

**Summation: Bildung der
einzelnen Aperturen**

**Einzel-Aperturen
(,Kanäle')**

**gegebenenfalls weitere Verarbeitungsschritte
(„Digital Beamforming")**

# Fig.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. Krieger ; N. Gebert ; A. Moreira.** Unambiguous SAR Signal Reconstruction from Nonuniform Displaced Phase Center Sampling. *IEEE Geoscience and Remote Sensing Letters,* 2004, vol. 1, 260-264
- **M. Younis.** Digital beam-forming for high-resolution wide swath real and synthetic aperture radar. *Karlsruhe, Deutschland,* 2004
- **N. Gebert ; G. Krieger ; A. Moreira.** SAR Signal Reconstruction from Non-Uniform Displaced Phase Centre Sampling in the Presence of Perturbations. *Proceedings of Geoscience and Remote Sensing Symposium (IGARSS),* 2005

- **H. Li ; H. Wang ; T. Su ; Z. Bao.** Generation of Wide-Swath and High-Resolution SAR Images From Multichannel Small Spaceborne SAR System. *IEEE Geoscience and Remote Sensing Letters,* Januar 2005, vol. 2 (1), 82-86
- **Artikel P. ; Lombardo, F.** An Alternating Transmit Approach for STAP with Short Antenna Arrays. *Radar Conference 2004, Proceedings of the IEEE,* 26. April 2004, ISSN 1097-5659, ISBN 0-7803-8234-X, 420-425
- **SEDEHI et al.** A study for a space-based passive Multichannel SAR. *RIUNIONE 2007 GTTI,* 19. Juni 2007, 1-6